# EUROPEAN PATENT APPLICATION

(11) **EP 1 916 590 A2**
(43) Date of publication of application: **30.04.2008**
(21) Application number: 07016365.4
(22) Date of filing: 21.08.2007
(51) Int. Cl.: G06F 1/16

(54) **Panel holder**

(30) Priority: 26.10.2006 CN 200610136520
(71) Applicant: Coretronic Corporation, Hsinchu Hsin chu (TW)
(72) Inventor: Tseng, Tsung-Chi, Hsinchu Science Park, Hsinchu (TW); Yang, Chi-Hua, Hsinchu Science Park, Hsinchu (TW); Yu, Wei-Han, Hsinchu Science Park, Hsinchu (TW)
(74) Representative: TER MEER - STEINMEISTER & PARTNER GbR

(57) **Abstract**

The present invention discloses a panel holder, which comprises a chassis. The chassis further comprises a frame. At least one first connection portion and at least one second connection portion are formed on two pairs of opposite laterals of the frame. First fixing members are installed in the laterals of the frame via the first connection portions, and a first type panel can be fixed to the chassis via the first fixing members. Alternatively, second fixing members are installed in the laterals of the frame via the second connection portions, and then, a second type panel can be fixed to the second fixing members. Therefore, in the present invention, an identical chassis can accommodate different types of panels.

## Description

### BACKGROUND OF THE INVENTION

### Field of the Invention

The present invention relates to a panel holder, particularly to a panel holder capable of accommodating accommodates different types of panels.

### Description of the Related Art

The touch screens may be classified into the infrared type, the acoustic type, the resistive type and the capacitive type. In principle, when a finger or another object contacts a touch screen, the detector will detect the variation in the touch screen and send the data to a processor, and the processor will work out the coordinate and the corresponding instruction according to the data, and then the execution result of the instruction will be presented on the screen.

At present, different types of touch screens need different chassis to hold their panels. For example, the acoustic, resistive and capacitive touch panels are installed in the chassis with an adhesive method or a fastening method, but the infrared touch panel is installed in a larger chassis with screws. Therefore, different types of touch panels cannot be accommodated with an identical chassis but need to fabricate their chassis molds separately. Thus, the number of making molds for different types of chassis increases and then the fabrication cost increases. Besides, to prevent EMI (ElectroMagnetic Interference) caused by the electronic elements in the back of the chassis, the electronic elements are separately covered with different shield casings; however, such a method reduces the assembly convenience.

Accordingly, the present invention proposes a panel holder, wherein an identical chassis can accommodate different types of touch panels.

### SUMMARY OF THE INVENTION

One objective of the present invention is to provide a panel holder, wherein different first connection portions and second connection portions are formed on the laterals of a chassis; thereby, the chassis can be used to accommodate different types of touch panels, such as the acoustic, the resistive, the capacitive and the infrared touch panels.

Another objective of the present invention is to provide a panel holder, wherein the parts are simplified and the required number of molds are decreased, so as to reduce the cost and promote the competitiveness.

Further objective of the present invention is to provide a panel holder, wherein a single casing is used to cover all the electronic elements arranged in the back of the chassis to block the electromagnetic interference generated by the electronic elements, and the assembly convenience is also improved thereby.

According to one aspect, the panel holder of the present invention comprises a chassis, and at least one first connection portion and at least one second connection portion are formed on at least two opposite laterals of the chassis. The panel holder of the present invention also comprises at least two first fixing members, which are detachably installed in the chassis and used to fix a first type panel. Each first fixing member has a first face and a second face connected with the first face; the first face is parallel to the lateral of the chassis and has at least one third connection portion corresponding to the first connection portion; the second face extends toward the first type panel and covers a portion of the first type panel; and the first fixing member can be assembled to the lateral of the chassis via connecting the third connection portion to the first connection portion. The panel holder of the present invention also comprises at least two second fixing member, which are detachably installed in the chassis and used to fix a second type panel. Each second fixing member has a third face and a fourth face connected with the third face; a portion of the third face is parallel to the lateral of the chassis, and the third face has at least one fourth connection portion corresponding to the second connection portion; the fourth face extends far away from the second type panel; and the second fixing member can be assembled to the lateral of the chassis via connecting the fourth connection portion to the second connection portion. When the first fixing members are installed in the laterals of the chassis, the first type panel can be fixed in the chassis. When the second fixing members are installed in the laterals of the chassis, the second type panel can be fixed in the second fixing members.

According to another aspect, the chassis of the present invention comprises: a frame, at least one first connection portion, and at least one second connection portion. The first connection portions are formed on the laterals of the chassis and used to install at least one first fixing member; thereby, a first type panel can be fixed in the chassis. The second connection portions are formed on the laterals of the chassis and used to install at least one second fixing member; thereby, a second type panel can be fixed in the second fixing members.

Other objectives, features and advantages of the present invention will be further understood from the further technology features disclosed by the embodiments of the present invention wherein there are shown and described preferred embodiments of this invention, simply by way of illustration of modes best suited to carry out the invention.

### BRIEF DESCRIPTION OF THE DRAWINGS

Fig. 1 is an exploded view schematically showing one embodiment of the present invention;
Fig. 2 is a perspective view schematically showing the assemblage of a first type panel according to the present invention;
Fig. 3 is a perspective view schematically showing the assemblage of a first type panel and a shield casing according to the present invention;
Fig. 4 is a perspective view schematically showing the assemblage of a second type panel and a shield casing according to the present invention;
Fig. 5 is a perspective view schematically showing the assemblage of a second type panel according to the present invention; and
Fig. 6 is an exploded view schematically showing another embodiment of the present invention.

### DETAILED DESCRIPTION OF THE INVENTION

In the following detailed description of the preferred embodiments, reference is made to the accompanying drawings which form a part hereof, and in which is shown by way of illustration specific embodiments in which the invention may be practiced. In this regard, directional terminology, such as "upper," "lower," " left," "right," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," and variations thereof herein are used broadly and encompass direct and indirect connections. Accordingly, the drawings and descriptions will be regarded as illustrative in nature and not as restrictive.

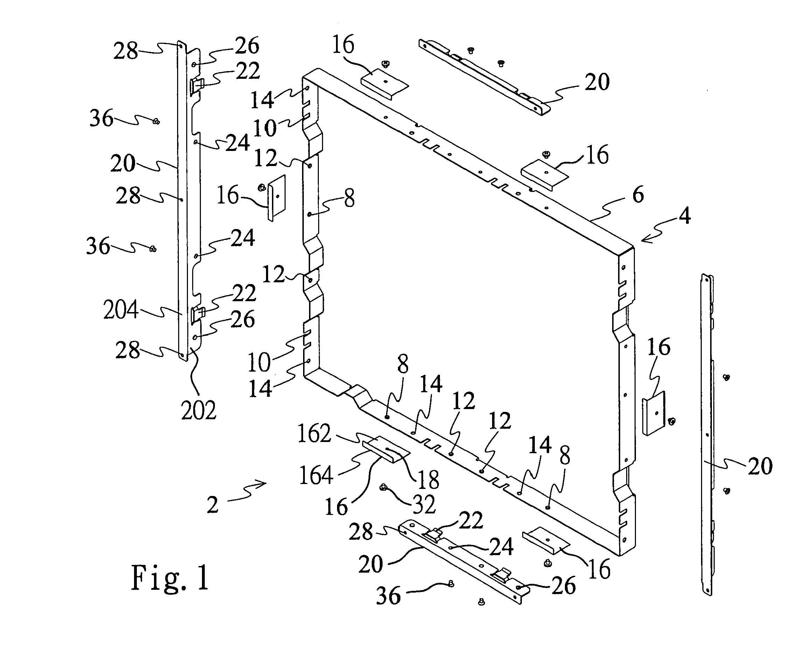

Referring to Fig. 1, a panel holder 2 according to the present invention comprises a chassis 4, at least two first fixing members 16 and at least two second fixing members 20. The chassis 4 includes a frame 6. The frame 6 has at least one first connection portions and at least one second connection portions formed on at least two opposite laterals. In this embodiment, the first connection portions and the second connection portions are formed respectively on the upper and lower laterals and the left and right laterals of the frame 6. The first connection portions may be tapped holes 8. The second connection portions may include slots 10, tapped holes 12 and positioning holes 14.

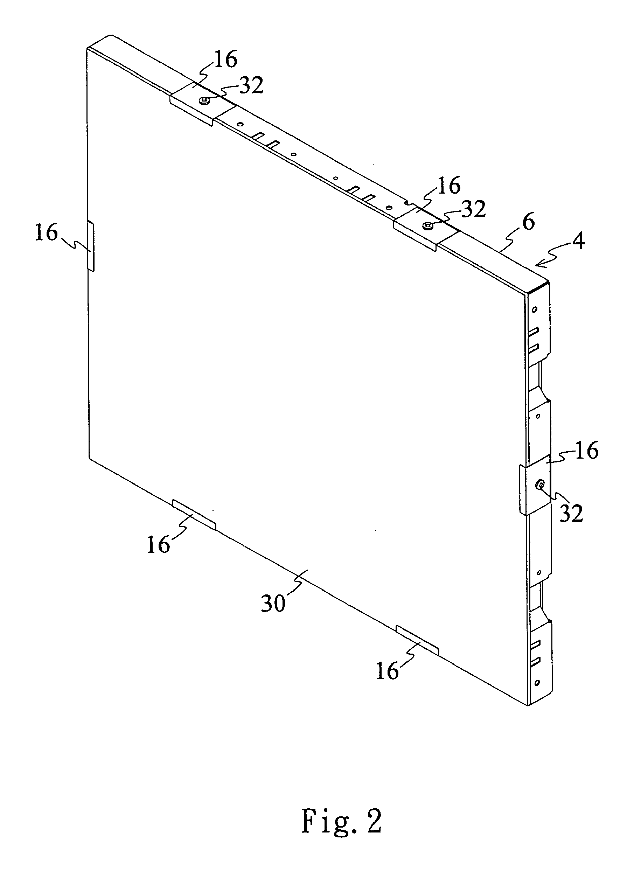

Each first fixing member 16 is detachably installed in the frame 6 to fix a first type panel 30, as shown in Fig. 2. Each first fixing member 16 has a first face 162 and a second face 164 connected with the first face 162, the first face 162 and the second face 164 form an L-section structure. The first face 162 is parallel to one lateral of the chassis 4 and has a third connection portion, such as a fixing hole 18. The second face 164 extends toward the first type panel 30 and covers a portion of the first type panel 30.

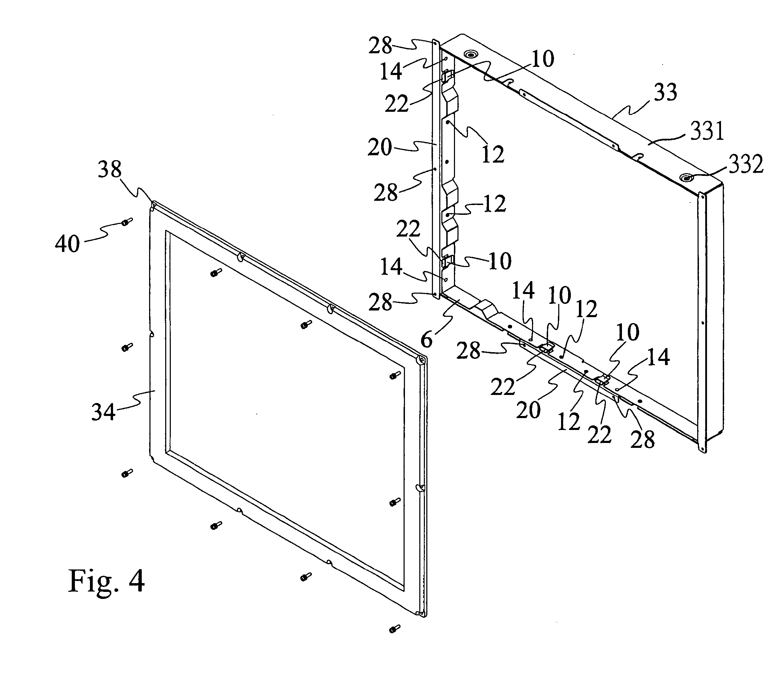

Each second fixing member 20 is detachably installed in the frame 6 and used to fix a second type panel 34, as shown in Fig. 4. Each second fixing member 20 has a third face 202 and a fourth face 204 connected with the third face 202, and the third face 202 and the fourth face 204 form an L-section structure. A portion of the third face 202 is parallel to one lateral of the frame 6, and the third face 202 has a fourth connection portion, which includes two hooks 22, two fixing holes 24 and two positioning protrusions 26. The fourth face 204 extends far away from the second type panel 34 and has the tapped holes 28 for fixing the second type panel 34.

Refer to Fig. 2. When the first type panel 30, such as the acoustic touch panel, the resistive touch panel or the capacitive touch panel, is to be assembled to the chassis 4, the first type panel 30 is firstly placed in the frame 6. Next, fixing elements such as screw 32 are screwed through the fixing holes 18 and the tapped holes 8 to secure the first fixing members 16 to the laterals of the frame 6. Each second face 164 covers a portion of the first type panel 30, and the first type panel 30 is thus secured to the frame 6 by those second faces 164.

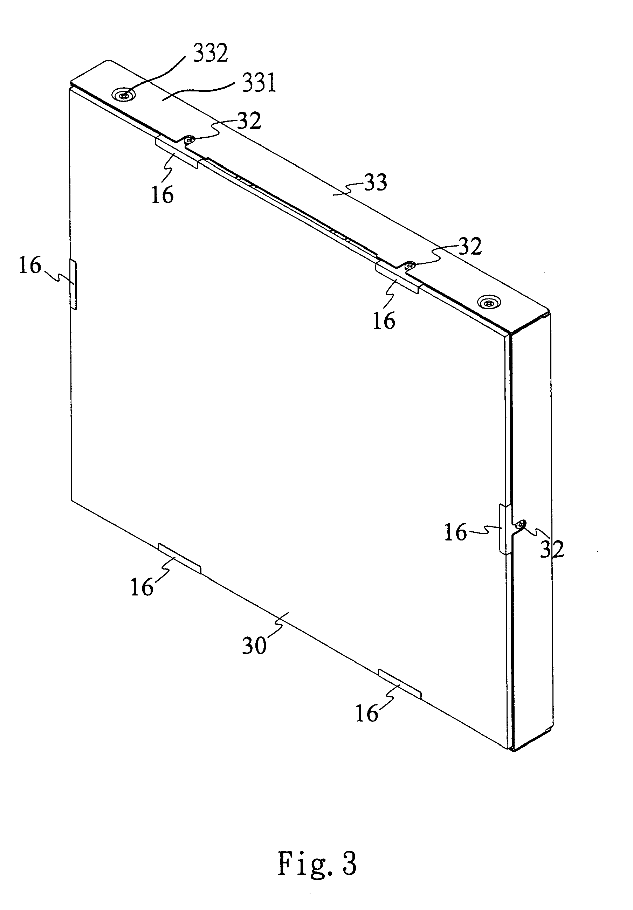

Refer to Fig. 3. After the first fixing members 16 have been installed in the laterals of the frame 6, a shield casing 33 encases the frame 6 and is secured to the laterals of the frame 6 with fixing elements such as screws 332. Thus, a portion of the first face 162 of each first fixing member 16 is firmly clamped in between one lateral of the frame 6 and one lateral 331 of the shield casing 33. Thereby, the first fixing members 16 are more securely fastened to the laterals of the frame 6. Besides, all the electronic elements behind the frame 6 are covered with the single shield casing 33 to block electromagnetic interference. Compared with the conventional technologies that the electronic elements are separately encased with different shield covers, the present invention has the advantage of the assembly convenience.

Refer to Fig. 4. When the second type panel 34, such as the infrared touch panel, is to be assembled to the chassis 4, the hooks 22 of the third faces 202 are separately press-fitted to the slots 10 of the laterals of the frame 6 firstly. Two positioning protrusions 26 of each third face 202 are separately inserted into two positioning holes 14 of one lateral of the frame 6, fixing elements such as screws 36 are screwed through the fixing holes 24 and the tapped holes 12 to fasten the second fixing members 20 to the laterals of the frame 6 firmly. Then, the second type panel 34 is secured to the frame 6 via fixing elements such as screws 40 fixing through fixing holes 38 and the tapped holes 28, wherein the fixing holes 38 of the second type panel 34 are formed in the positions corresponding to the tapped holes 28 of the fourth faces 204.

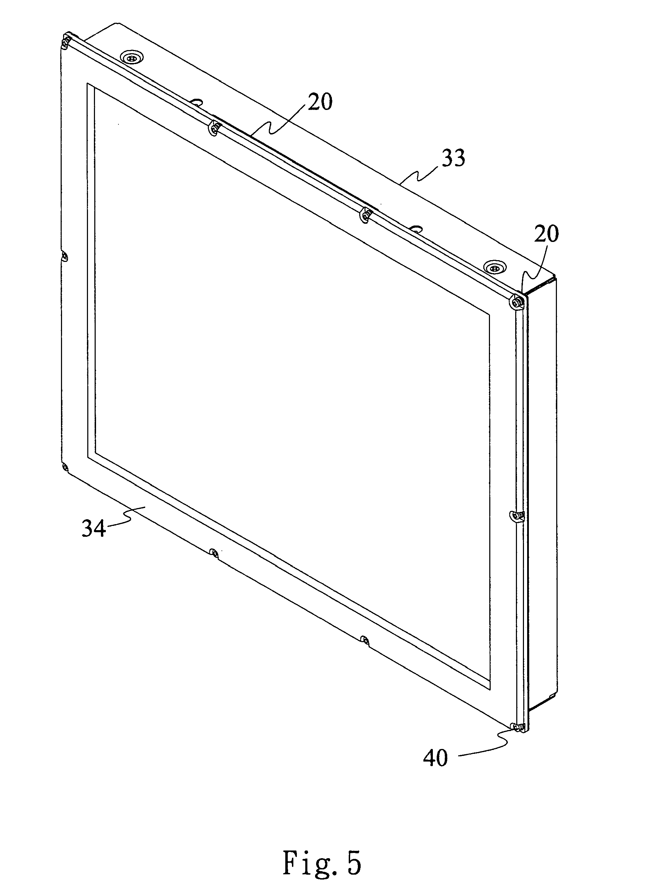

Refer to Fig. 5. Similarly, in the assembly of the second type panel 34, the shield casing 33 encases the frame 6. The second fixing members 20 are thus more firmly fastened to the laterals of the frame 6. Besides, all the electronic elements behind the frame 6 are covered with the single shield casing 33 to block electromagnetic interference. The shield casing 33 is secured to the laterals 331 of the frame 6 with the fixing elements such as the screws 332. The third face 202 of each second fixing member 20 is firmly clamped in between one lateral of the frame 6 and one lateral 331 of the shield casing 33.

The step of screwing the screws 36 through the fixing holes 24 and the tapped holes 12 can be substituted by installing the shield casing 33 to clamp the third faces 202 of the second fixing members 20. Thereby, the screws 36, assembly time and fabrication cost can be saved.

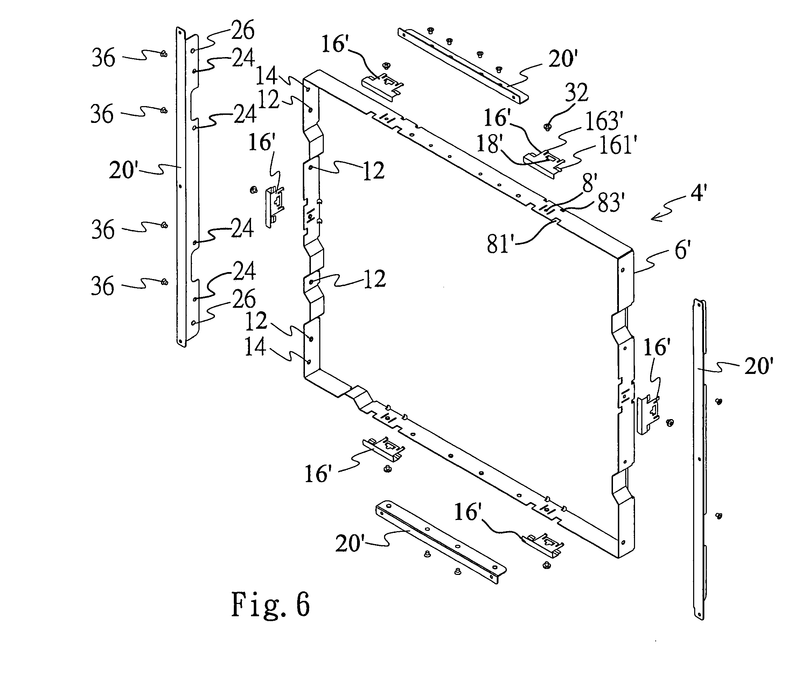

Refer to Fig. 6 for another embodiment of the present invention. The difference between the embodiment shown in Fig. 6 and Fig. 1 is as following. In Fig. 6, each first connection portion of the frame 6' includes for example, tapped holes 8', slots 81 and slots 83. Each first fixing member 16' has a third connection portion including hooks 161', hooks 163' and fixing holes 18'. The first fixing members 16' are secured to the frame 6' via press-fitting the hooks 161' and the hooks 163' of the first fixing members 16' to the slots 81' and the slots 83' on the laterals of the frame 6' and screwing fixing elements such as screws 32 through the fixing holes 18' and the tapped holes 8'. Thereby, the first type panel (not shown in the drawing) can be installed in the chassis 4'. In Fig. 6, each second connection portion of the frame 6' includes for example, four tapped holes 12 and two positioning holes 14, fourth connection portion of each second fixing member 20' includes for example, four fixing holes 24 and two positioning protrusions 26. Two positioning protrusions 26 are separately inserted into two positioning holes 14; and fixing elements such as screws 36 are screwed through the fixing holes 24 and the tapped holes 12. Thereby, the second fixing members 20' are secured to the laterals of the frame 6' firmly. Then, the second type panel (not shown in the drawing) can be installed in the second fixing members 20' with fixing elements such as screws.

In addition to the connection method concerning the first, second, third, fourth connection portions according to the present invention described above, for example, the first connection portion includes tapped holes 8, and the second connection portion includes four tapped holes 12 and two positioning holes 14, and the third connection portion includes fixing holes 18, and the fourth connection portion includes four fixing holes 24 and two positioning protrusions 26. Otherwise, the first connection portion includes tapped holes 8', slots 81' and slots 83', and the second connection portion includes slots 10, four tapped holes 12 and two positioning holes 14, and the third connection portion includes hooks 161', hooks 163' and fixing holes 18', and the fourth connection portion includes hook 22, four fixing holes 24 and two positioning protrusions 26.

It is concluded from those described above, according to the present invention, a panel holder which utilizes one type of common chassis to accommodate different types of touch panels is provided. When at least one first connection portion is installed in each of at least two opposite laterals of the chassis, the first type panel can be installed in the chassis. When at least one second connection portion is installed in each of at least two opposite laterals of the chassis, the second type panel can be installed in the second connection portions. Therefore, both the first type panel and the second type panel can be installed in the chassis of the present invention.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like is not necessary limited the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A panel holder for holding a panel comprising:
a chassis including a frame, said frame having at least one first connection portion and at least one second connection portion formed on at least two opposite laterals of said frame;
at least two first fixing members detachably installed in said chassis and used to fix a first type panel, wherein each said first fixing member has a first face and a second face connected with said first face; said first face is parallel to the lateral of said chassis and has at least one third connection portion corresponding to said first connection portion; said second face extends toward said first type panel and covers a portion of said first type panel; and
at least two second fixing members detachably installed in said chassis and used to fix a second type panel, wherein each said second fixing member has a third face and a fourth face connected with said third face; a portion of said third face is parallel to the lateral of said chassis, and said third face has at least one fourth connection portion corresponding to said second connection portion; said fourth face extends far away from said second type panel; and said second type panel is fixed on said fourth faces.

2. The panel holder according to claim 1, wherein said first type panel is an acoustic touch panel, a resistive touch panel, or a capacitive touch panel; and said second type panel is an infrared touch panel.

3. The panel holder according to claim 1, wherein said second type panel has fixing holes, and said fourth face of each said second fixing member has tapped holes corresponding to said fixing holes; and said second panel is fixed to said fourth faces of said second fixing members via said fixing elements fixing through said fixing holes and said tapped holes.

4. The panel holder according to claim 1, further comprising a shield casing used to encase said chassis, wherein fixing elements are used to fasten said shield casing to the laterals of said chassis, and a portion of said first fixing member or said second fixing member is clamped in between one lateral of said chassis and one lateral of said shield casing.

5. A chassis for a panel, comprising:
a frame;
at least one first connection portion formed on the lateral of said frame and used to install at least one first fixing member, wherein said first fixing member is used to fix a first type panel; and
at least one second connection portion, formed on the lateral of said frame and used to install at least one second fixing member, wherein said second fixing member is used to fix a second type panel.

6. The chassis according to claim 5, wherein said first type panel is an acoustic touch panel, a resistive touch panel, or a capacitive touch panel; and said second type panel is an infrared touch panel.

7. The chassis according to claim 5, wherein said first fixing member includes a first face and a second face, and said first face is connected with said second face; said first face is parallel to the lateral of said frame and has at least one third connection portion corresponding to said first connection portion; said second face extends toward said first type panel and covers a portion of said first type panel; and said first fixing member and said first connection portion are assembled together in the lateral of said frame.

8. The chassis according to claim 5, wherein said second fixing member includes a third face and a fourth face, and said third face is connected with said fourth face; a portion of said third face is parallel to the lateral of said frame, and said third face has at least one fourth connection portion corresponding to said second connection portion; said fourth face extends far away from said second type panel; and said second fixing member and said second connection portion are assembled together in the lateral of said frame.

9. The chassis according to claim 5, further comprising a shield casing used to encase said frame, wherein fixing elements are used to fasten said shield casing to the lateral of said frame, and said first fixing member or said second fixing member is clamped in between one lateral of said frame and one lateral of said shield casing.
